Europäisches Patentamt

(19) European Patent Office

Office européen des brevets

(11) Numéro de publication: **0 158 830**
**B1**

(12) **FASCICULE DE BREVET EUROPEEN**

(45) Date de publication du fascicule du brevet:
**03.08.88**

(51) Int. Cl.⁴: **C 03 C  17/32,** B 65 D  77/20

(21) Numéro de dépôt: **85102898.5**

(22) Date de dépôt: **14.03.85**

(54) **Procédé de traitement de récipients en verre pour le thermoscellage.**

(30) Priorité: **29.03.84  FR 8404936**

(43) Date de publication de la demande:
**23.10.85 Bulletin 85/43**

(45) Mention de la délivrance du brevet:
**03.08.88 Bulletin 88/31**

(84) Etats contractants désignés:
**AT BE CH DE FR GB IT LI NL SE**

(56) Documents cités:
**EP - A - 0 011 588**
**FR - A - 1 434 741**
**GB - A - 2 130 574**
**US - A - 3 577 256**

(73) Titulaire: **SOCIETE DES VERNIS BOUVET, B.P. 51 Rue Chanay 14, I-71700 Tournus (FR)**

(72) Inventeur: **Dubois, Jean, "En Bagatelle", F-71700 Tournus (FR)**

(74) Mandataire: **Casalonga, Axel et al, BUREAU D.A. CASALONGA OFFICE JOSSE & PETIT Morassistrasse 8, D-8000 München 5 (DE)**

ACTORUM AG

# Description

La présente invention a pour objet un procédé de traitement de récipients de verre tel que des pots ou bouteilles en vue de leur thermoscellage.

Les récipients en verre tels que les pots ou bouteilles sont scellés soit à l'aide de capsules à vis ou à crans qui sont des dispositifs de scellage très onéreux.

On connaît par ailleurs le thermoscellage à l'aide de feuilles d'aluminium revêtues. Le thermoscellage de récipients de verre non traités présente cependant souvent des problèmes d'adhérence de la feuille scellée. Par ailleurs, le thermoscellage de récipients traités avec les procédés classiques, c'est-à-dire à chaud dit «bout chaud» avec des dérivés d'étain ou de titane suivi d'un traitement dit «bout froid» ne permet pas d'avoir un scellage fiable dans le temps en raison notamment des problèmes d'adhérence de la feuille d'aluminium au récipient en verre.

On connait par le brevet EP – A 0011588 un procédé de thermoscellage consistant à appliquer sur la couronne du récipient destiné à recevoir la feuille destinée au scellage, une matière plastique cette matière étant constituée par une solution organique ou organique aqueuse d'un alkyltrialcoxysilane, d'un alkyltrichlorosilane ou d'un mélange d'alkylalcoxy chlorosilanes.

On connait par ailleurs du brevet américain 3.577.256 des compositions destinées à former des revêtements résistant aux rayures et à l'abrasion mais pouvant être enlevés par l'eau, à base de résine acrylique et de résine mélamineformaldéhyde. De même on connait du brevet FR A 1.434.741 un procédé de revêtement de bouteilles ou d'autres récipients en verre comprenant l'application d'une composition à base d'un mélange de résines acrylique et aminoplaste. Ces différents documents n'enseignent cependant pas l'application d'un tel revêtement dans le thermoscellage des récipients.

La demanderesse a découvert un procédé de traitement de récipients en verre, portant au moins sur la couronne sur laquelle doit être appliquée la feuille d'aluminium permettant le thermoscellage. Grâce à ce traitement, il est possible d'avoir un thermoscellage peu onéreux et fiable dans le temps.

La demanderesse a découvert par ailleurs qu'en appliquant ce traitement sur l'ensemble du récipient et pour le moins sur la surface externe, il était possible de renforcer la résistance à la rayure et au bris du verre, et d'augmenter le glissant.

Ce traitement consiste essentiellement a appliquer une composition à base de résine aminoplaste.

Ce traitement peut être effectué soit sur du verre non traité, dans ce cas il renforce la résistance à la rayure, donne la glisse nécessaire et permet le thermoscellage, soit sur du verre traité à chaud avec les procédés traditionnels à l'étain ou au titane afin d'assurer une sécurité supplémentaire, dans ce cas il assure la glisse nécessaire et améliore les qualités du thermoscellage.

Le procédé de traitement conforme à l'invention est essentiellement caractérisé par le fait que l'on applique sur un récipient en verre et au moins sur la partie destinée à recevoir le dispositif de scellage à une température comprise entre 70 et 150° C, au moins une composition contenant en milieu aqueux, une résine aminoplaste ou un mélange de résines acryliques et aminoplastes et qu'après séchage, on procède au thermoscellage à l'aide d'une feuille d'aluminium revêtue d'un vernis ou d'un film plastique approprié.

Les résines utilisées sont choisies parmi les résines acryliques ou aminoplastes et plus particulièrement parmi les résines mélaminformol, hexaméthoxymélamine, carbamide, urée formol, dispersibles ou solubles en milieu aqueux, associées à des solutions, ou des dispersions en milieu aqueux de résines acryliques, thermoplastiques et/ou thermodurcissables.

Ces résines sont présentes dans les compositions conformes à l'invention dans les proportions comprises entre 0,15 et 20% en poids exprimé en matières actives et de préférence entre 1 et 10% en poids. Elles ont un poids moléculaire compris entre 500 et 3 000 000.

Selon une forme de réalisation préférentielle, les résines aminoplastes et acryliques sont associées à des résines polyuréthanes. Selon une autre forme de réalisation, ces résines sont associées à des résines polyesters et des résines époxy.

Ces résines supplémentaires peuvent être présentes dans les proportions parfois même supérieures à celles des résines aminoplastes ou des résines acryliques. Les proportions en résine de ce type sont de préférence comprises entre 50 et 80% en poids par rapport au poids total des résines présentes.

Le milieu solvant utilisé dans les compositions conformes à l'invention peut être constitué par de l'eau ou par un mélange d'eau et d'un solvant organique choisi parmi les alcools, les glycols, les amines.

Ces compositions peuvent se présenter en particulier sous forme de solutions telles que des solutions aqueuses ou hydroalcooliques et contenir des amines choisies parmi les alkylamines ou les alcanolamines telles que par exemple la diéthylamine ou la triéthanolamine.

Les compositions conformes à l'invention peuvent également, suivant la nature des résines utilisées, se présenter sous forme d'émulsions ou de solutions colloïdales à base des solvants indiqués ci-dessus.

Dans le cas des émulsions, on utilise de préférence des alkyléthers de diéthylèneglycol tels que l'éther monobutylique de diéthylèneglycol. Ce type de solvant est présent dans des proportions allant jusqu'à 30% et permet notamment d'obtenir dans le cas où l'on utilise une émulsion, un film clair et transparent sur les récipients en verre.

Les compositions utilisées dans le procédé conforme à l'invention peuvent également contenir des silicones ou des dérivés du zirconium ainsi que d'autres adjuvants tels que des cires, des agents de tension, des polyols eux-mêmes solubles ou dispersibles dans l'eau et qui peuvent également encore renforcer les propriétés de résistance de glisse.

Les silicones sont de préférence des polyméthylsiloxanes ou des polyméthylphénylsiloxanes utilisées dans des proportions allant jusqu'à 5% en poids de l'extrait sec de la composition.

Les dérivés du zirconium sont de préférence des sels d'acide carboxyliques tels que le propionate de zirconium, le carbonate de zirconium et d'ammonium, le stéarate de zirconium, le méthacrylate de zirconium, utilisés comme agent de promotion d'adhésion. On peut citer les produits vendus sous la dénomination BACOTE® par la Société MAGNESIUM ELEKTRON LTD.

Conformément au procédé de l'invention, on applique les compositions définies ci-dessus sur les lignes de fabrication de récipients en verre à la sortie de l'arche. L'application peut se faire par pistolettage au moyen d'un pistolet pneumatique ou sans air avec effet électrostatique ou non.

Le film est appliqué de telle façon à recouvrir au moins la couronne du récipient du verre destinée à recevoir le moyen de scellage et de préférence recouvrir la surface extérieure du récipient en verre et être continu. Le film présente une épaisseur qui peut être variable en fonction du résultat désiré qui est comprise de préférence entre 0,5 et 5 micromètres.

On obtient ainsi pour les récipients en verre revêtus, un très bon pouvoir glissant, une résistance améliorée à la rayure, à la pasteurisation, au stockage en milieu particulièrement agressif et au rinçage avec des solutions de soude caustique chaude. De plus, le revêtement ne favorise pas le développement des moisissures.

Le thermoscellage s'effectue par application d'une feuille d'aluminium revêtue d'un vernis ou d'un film plastique approprié tel que plus particulièrement un film en polyester comme par exemple le film Surlyn de la Société DuPont de Nemours. On peut utiliser entre autres également pour le thermoscellage des feuilles d'aluminium vendues sous la marque Gekalid de la Société Nyffeler Corti AG ou Aluthène de la Société l'Alsacienne d'Aluminium.

La feuille d'aluminium revêtu est appliquée sur le récipient destiné à être scellé à l'aide d'une tête chauffante pendant quelques secondes, de préférence 1 à 2 secondes à une température suffisante pour fixer la feuille au récipient. Cette température est comprise entre 100 et 300°C, suivant la nature du revêtement de la feuille d'aluminium.

On obtient de cette façon un thermoscellage ayant une résistance de l'ordre de 3 kg et plus.

Les compositions utilisées dans le procédé conforme à l'invention peuvent être préparées sous deux formes, soit sous forme d'un conditionnement unique, soit sous forme d'un conditionnement à deux composants.

Lorsque la composition utilisée conformément à l'invention est préparée sous forme d'un conditionnement à deux composants, le premier composant est constitué par une solution ou une émulsion contenant les résines et les adjuvants et le second constituant contient le catalyseur. Les deux composants peuvent être mélangés avant l'emploi selon un poids volumétrique ou pondéral prédéterminé. Le mélange pourra également être réalisé directement dans la tête du pistolet selon le principe de double arrivée dans un rapport volumétrique approprié.

Les catalyseurs utilisés dans ce cas sont connus en eux-mêmes et suivant la vitesse de polymérisation et la propriété recherchée, on utilisera un acide organique tel que l'acide butylphosphorique, l'acide para-toluène sulfonique, l'acide benzène sulfonique, l'acide para-phénolsulfonique, ou tout autre acide à groupement sulfonique ou sulfurique ou alors un acide inorganique tel que l'acide sulfurique et phosphorique ou d'aziridine, ces acides pouvant éventuellement être additionnés d'eau ou d'un mélange d'eau et d'un solvant organique comme indiqué ci-dessus.

Dans le cas où le produit et utilisé sous forme d'un conditionnement en un seul composant, on utilise les catalyseurs comme cela est bien connu sous forme de sel organique qui est ajouté à la composition au moment de la fabrication. La catalyse sera dans ce cas effective au moment de l'apppplication et on pourra naturellement ajouter tout autre produit tels que des sels métalliques accélérant la catalyse.

Les catalyseurs sont additionnées dans des proportions catalytiquement efficaces et comprises de préférence entre 0,1 à 5% en poids par rapport au poids total de la composition. On peut utiliser entre autres des composés d'aziridène dans les proportions de 0,2 à 1,5% en poids.

On constate que les récipients en verre traités conformément à l'invention présentent en plus l'avantage de ne pas poser de problèmes de pollution. En effet, le traitement ne nuit pas au recyclage du verre, les résines utilisées se détruisent entièrement sous les hautes températures et sont éliminées sous forme de gaz $CO_2$, $H_2O$ et NO.

Les exemples suivants sont destinés à illustrer l'invention sans pour autant présenter un caractère limitatif.

Exemple I
On présente la composition suivante:
- Résine urée/formol DYNOMIN UM-15®    6,2
(vendue par la Société Dyno)
- Acide paratolène sulfonique    0,2
- Silicone SILANE® A-1100    0,2
(vendue par la Société Union Carbide)
- Eau    qsp 100,0

Après séchage du récipient, on applique sur ce dernier une feuille d'aluminium revêtue d'un film de polyester Surlyn de la Société DuPont de Nemours. La feuille est appliquée au moyen d'une tête chauffante à une température de 150°C. On constate après application pendant environ 1 seconde une bonne adhérence de la feuille qui est encore améliorée après refroidissement total. Un essai d'arrachement montre une résistance supérieure à 3 kg.

Exemple II
On prépare la composition suivante:
- Acrylique ACRYMUL® AM-185-RS　6,0
(vendu par la Société Protex)
- Mélamine modifiée vendue sous la
référence PROX® M-3-R　0,46
(par la Société Protex)
- Cire de polyéthylène EN-62　0,6
(vendue par la Société Polychimie)
- Silicone SILANE® A-1100　0,4
(vendue par la Société Union Carbide)
- Eau/éthermonobutylique de
diéthylène glycol　qsp 100,0

On procède ensuite au thermoscellage au moyen d'une feuille d'aluminium vendue sous la dénomination Gekalid par la Société Nyffeler Corti AG. Cette feuille d'aluminium est appliquée au moyen d'une tête chauffante à une température de 150°C. On constate après refroidissement que le thermoscellage a une bonne résistance et se conserve dans le temps.

Exemple III
- ACRYMUL® 185-RS – 50% d'extrait sec　9,0
(vendu par la Société Protex)
- PROX® M-3-R – 68% d'extrait sec　0,7
- Cire EN-62 – 20% d'extrait sec　1,0
(vendu par la Société Polychimie)
- BACOTE®-20　0,3
(vendue par MAGNESIUM ELEKTRON LTD)
- Eau/éthermonobutylique de diéthylène
glycol (70/30)　89,0
　100,00
- Catalyseur Aziridène tel que
NEOCRYL® CX-100　1,0
(vendu par la Société Polyvinyl Chemie)
- Eau　100,0

Après thermoscellage comme indiqué dans l'exemple I, on aboutit à un produit présentant de bonnes propriétés. Il est possible par ce moyen de conserver entre autres de façon fiable des aliments divers. Les noms commerciaux utilisés dans les exemples qui précèdent, désignent notamment les produits suivants:
DYNOMIN® UM-15: résine urée formoldéhyde méthylée ayant une viscosité de
9500 à 21 000 à 20°C et un poids spécifique de 1, vendue par la Société Dyno Industries A.S.
ACRYMUL® AM-185-RS: émulsion d'une résine acrylique à 50% d'extrait sec,
de viscosité inférieure à 100 cps à 20°C et de poids spécifique de 1.
PROX® M-3-R: résine de mélamine formol méthylée à 68% d'extrait sec.
CIRE EN-62: émulsion de cire de polyéthylène, de poids moléculaire = 2100.
SILANE® A-1100: silicone fabriqué et commercialisé par la Société Union Carbide.

BACOTE® 20: est un carbonate de zirconium ammonium.

**Revendications**

1. Procédé de thermoscellage de récipients en verre consistant à appliquer au moins sur la couronne du récipient destiné à recevoir la feuille de scellage une composition contenant une résine et qu'après séchage on applique sur ladite couronne une feuille destinée au scellage, revêtue d'un vernis ou d'un film plastique, au moyen d'une tête chauffante, pendant une durée et à une durée et à une température suffisantes pour fixer la feuille sur le récipient et la sceller, caractérisé par le fait que l'on applique une composition contenant en milieu aqueux une résine aminoplaste ou un mélange de résine aminoplaste et de résine acrylique, sur la couronne du récipient en verre, à une température de 70 à 150°C.

2. Procédé selon la revendication 1, caractérisé par le fait que les résines aminoplastes sont choisies parmi les résines urée/formol, mélamine/formol, hexaméthoxymélamine, carbamide.

3. Procédé selon l'une quelconque des revendications 1 ou 2, caractérisé par le fait que la composition contient en plus au moins une résine du type polyuréthane.

4. Procédé selon l'une quelconque des revendications 1 à 3, caractérisé par le fait que le composition contient en plus d'autres résines dispersibles ou solubles dans l'eau du type époxy ou polyester.

5. Procédé selon l'une quelconque des revendications 1 à 4, caractérisé par le fait que la composition contient en plus au moins une silicone ou un dérivé de zirconium.

6. Procédé selon l'une quelconque des revendications 1 à 5, caractérisé par le fait que la composition se présente sous forme d'une solution aqueuse contenant ou non en plus de l'eau, des alcools, polyols et/ou des amines, ou sous la forme d'une émulsion ou de composition colloïdale.

7. Procédé selon l'une quelconque des revendications 1 à 6, caractérisé par le fait que l'émulsion contient en plus des résines et du milieu aqueux au moins un alkyléther de diéthylèneglycol.

8. Procédé selon l'une quelconque des revendications 1 à 7, caractérisé par le fait que la composition est appliquée après mélange tout juste avant l'application avec un catalyseur pour les résines, le catalyseur étant choisi parmi les acides minéraux tels que phosphoriques ou sulfoniques ou organiques.

9. Procédé de préparation d'un récipient de verre destiné à être scellé par thermoscellage d'une feuille métallique, comportant l'application sur la couronne du récipient recevant ladite feuille de scellage d'une composition contenant une résine, caractérisée par le fait que la température de la couronne du récipient est comprise entre 70 et 150°C au moment de l'application de la composition à base de résine et que la composition à base de résine contient en milieu aqueux une résine aminoplaste ou un mélange de résine aminoplaste et de résine acrylique.

10. Procédé de thermoscellage de récipients en verre consistant à appliquer sur la couronne dudit récipient une feuille destinée au scellage revêtue d'un vernis ou d'un film plastique au moyen d'une tête chauffante pendant une durée et une température suffisante pour fixer la feuille sur le récipient et la sceller, ladite couronne recevant la feuille étant revêtue d'un film d'une résine, caractérisé par le fait que ledit film est à base d'une résine aminoplaste ou d'un mélange de résine acrylique et aminoplaste.

11. Procédé selon la revendication 10, caractérisé par le fait que l'on procède au thermoscellage en appliquant sur la couronne du récipient traité, une feuille d'aluminium revêtue d'un vernis ou d'une résine appropriée au moyen d'une tête chauffante pendant une durée de 1 à 2 secondes et à une température de 100 à 300°C.

## Patentansprüche

1. Verfahren zum Heisssiegeln von Glasgefässen, darin bestehend, dass zumindest auf die Mündung des Gefässes, das die Verschlussfolie aufnehmen soll, eine harzhaltige Zusammensetzung aufgetragen wird, und dass man nach dem Trocknen auf die Mündung eine für den Verschluss bestimmte Folie, die mit einem Lack oder einem Plastikfilm beschichtet ist, mittels eines Heizkopfes während einer Zeit und bei einer Temperatur, die ausreichen, um die Folie auf dem Gefäss zu befestigen und es zu verschliessen, aufbringt, dadurch gekennzeichnet, dass man auf die Mündung des Glasgefässes bei einer Temperatur von 70 bis 150°C eine Zusammensetzung aufträgt, die in einem wässrigen Medium ein Aminoplastharz oder ein Gemisch eines Aminoplast- und eines Acrylharzes enthält.

2. Verfahren nach Anspruch 1, dadurch gekennzeichnet, dass die Aminoplaste unter den Harnstoff-Formaldehyd-, Melamin-Formaldehyd-, Hexamethoxymelamin- und Karbamidharzen ausgewählt werden.

3. Verfahren nach einem der Ansprüche 1 oder 2, dadurch gekennzeichnet, dass die Zusammensetzung zusätzlich zumindest ein Polyurethanharz enthält.

4. Verfahren nach einem der Ansprüche 1 bis 3, dadurch gekennzeichnet, dass die Zusammensetzung zusätzlich weitere in Wasser dispergierbare oder lösliche Epoxid- oder Polyesterharze enthält.

5. Verfahren nach einem der Ansprüche 1 bis 4, dadurch gekennzeichnet, dass die Zusammensetzung ausserdem zumindest ein Silikon oder ein Zirkoniumderivat enthält.

6. Verfahren nach einem der Ansprüche 1 bis 5, dadurch gekennzeichnet, dass die Zusammensetzung die Form einer wässerigen Lösung aufweist, die ausser dem Wasser Alkohole, Polyole und/oder Amine entweder in Form einer Emulsion oder einer kolloidalen Zusammensetzung enthält oder nicht.

7. Verfahren nach einem der Ansprüche 1 bis 6, dadurch gekennzeichnet, dass die Emulsion ausser den Harzen und dem wässrigen Medium zusätzlich ein Diethylenglykol-Alkyläther enthält.

8. Verfahren nach einem der Ansprüche 1 bis 7, dadurch gekennzeichnet, dass die Zusammensetzung aufgetragen wird, nachdem sie unmittelbar vor dem Auftragen mit einem Katalysator für die Harze vermischt wurde, wobei der Katalysator entweder unter den anorganischen Säuren wie Phosphor- oder Sulfonsäure oder unter den organischen Säuren ausgewählt wird.

9. Verfahren zur Vorbereitung eines Glasgefässes, das dazu bestimmt ist, durch Heisssiegeln mit einer Metallfolie verschlossen zu werden, welches das Auftragen einer Zusammensetzung, die ein Harz enthält, auf der Mündung des Gefässes, welche die Verschlussfolie aufnimmt, umfasst, dadurch gekennzeichnet, dass die Temperatur der Mündung des Gefässes zum Zeitpunkt des Auftragens der Zusammensetzung auf Harzbasis zwischen 70 und 150°C beträgt, und dass die Zusammensetzung auf Harzbasis in einem wässerigen Medium ein Aminoplastharz oder ein Gemisch eines Aminoplast- und eines Acrylharzes enthält.

10. Verfahren zum Heisssiegeln von Glasgefässen, das darin besteht, dass auf die Mündung des Gefässes eine Folie aufgebracht wird, die als Verschluss dienen soll, welche mit einem Lack oder einem Plastikfilm mit Hilfe eines Heizkopfes während einer Zeit und bei einer Temperatur beschichtet wird, die ausreichen, um die Folie auf dem Gefäss zu befestigen und zu verschliessen, wobei die Mündung, welche die Folie aufnimmt, mit einem Harzfilm beschichtet ist, dadurch gekennzeichnet, dass dieser Film auf Basis eines Aminoplastharzes oder einer Mischung aus einem Acryl- und einem Aminoplastharz hergestellt ist.

11. Verfahren nach Anspruch 10, dadurch gekennzeichnet, dass man das Heisssiegeln durchführt, indem man auf die Mündung des behandelten Gefässes eine Aluminiumfolie aufbringt, die mit einem geeigneten Lack oder Harz während einer Dauer von 1 bis 2 Sekunden und bei einer Temperatur von 100 bis 300°C mit einem Heizkopf beschichtet wird.

## Claims

1. A process for the heat sealing of glass containers involving applying at least to the rim of the container intended to receive the sealing foil a resin-containing composition and in that, after drying, there is applied to said rim a foil which is intended for sealing purposes and is coated with a lacquer or a plastic film, by means of a heating arrangement, for a period and at a temperature which are sufficient to fix the foil on the container and to seal it, characterised in that a composition containing an aminoplast resin or a mixture of aminoplast resin and acrylic resin in aqueous medium is applied to the rim of the glass container at a temperature of from 70 to 150°C.

2. A process according to Claim 1 or 2, characterised in that the aminoplastic resins are selected from the ureaformaldehyde, melamine-formaldehyde, hexamethoxymelamine, carbamide resins.

3. A process according to any one of Claims 1 or 2, characterised in that the composition also contains at least one polyurethene type resin.

4. A process according to any one of Claims 1 to 3, characterised in that the composition also contains other water-dispersible or water-soluble resins of the epoxy or polyester type.

5. A process according to any one of Claims 1 to 4, characterised in that the composition also contains at least one silicone or one zirconium derivative.

6. A process according to any one of Claims 1 to 5, characterised in that the composition assumes the form of an aqueous solution containing or not containing, in addition to the water, alcohols, polyols and/or amines or the form of a colloidal emulsion or composition.

7. A process according to any one of Claims 1 to 6, characterised in that the emulsion contains at least one dienthylene glycol alkyl ether in addition to the resins and the aqueous medium.

8. A process according to any one of Claims 1 to 7, characterised in that the composition is applied after mixing just prior to application with a catalyst for resins, the calalyst being selected from the mineral acids such as phosphoric or sulphonic acids or organic acids.

9. A process for the preparation of a glass container intended to be sealed by heat sealing of a metallic foil involving the application to the rim of the container receiving said sealing foil of a resin-containing composition, characterised in that the temperature of the rim of the container is between 70 and 150°C at the moment of application of the resin-based composition and that the resin-based composition contains an aminoplast resin or a mixture of aminoplast resin and acrylic resin in aqueous medium.

10. A process for the heat sealing of glass containers involving applying to the rim of said container a foil intended for sealing purposes which is coated with a lacquer or a plastic film by means of a heating arrangement for a period and at a temperature which are sufficient to fix the foil on the container and to seal it, said rim receiving the foil being coated with a resin film, characterised in that said film is based on an aminoplast resin or a mixture of acrylic and aminoplast resin.

11. A process according to Claim 10, characterised in that the heat sealing is carried out by applying to the rim of the treated container an aluminium foil coated with a lacquer or a suitable resin by means of a heating arrangement for a period of from 1 to 2 seconds and at a temperature of from 100 to 300°C.